# EUROPÄISCHE PATENTANMELDUNG

(11) **EP 2 397 222 A1**
(43) Veröffentlichungstag der Anmeldung: **21.12.2011**
(21) Anmeldenummer: 10166401.9
(22) Anmeldetag: 17.06.2010
(51) Int. Cl.: B01J 21/06, B01J 35/00, B01J 35/02, B01J 35/10, B01J 37/03, B01J 37/02, B01J 37/06, B01J 37/00

(54) **Titandioxid mit einem Gehalt an ZrO2, Verfahren zu dessen Herstellung und dessen Verwendung**

(71) Anmelder: Sachtleben Chemie GmbH, 47198 Duisburg (DE)
(72) Erfinder: Gesenhues, Ulrich, 47441, Moers (DE); Weyand, Sonja, 47059, Duisburg (DE)
(74) Vertreter: Nobbe, Matthias

(57) **Zusammenfassung**

Die Erfindung betrifft ein Titandioxid mit einem Gehalt an ZrO₂, Verfahren zu dessen Herstellung und dessen Verwendung, insbesondere zur Herstellung von Trägermaterialien für die Katalyse oder Chromatographie.

## Beschreibung

Die Erfindung betrifft Titandioxid in Teilchenform mit einem Gehalt an ZrO₂, Verfahren zu dessen Herstellung und dessen Verwendung, insbesondere zur Herstellung von Trägermaterialien für die Katalyse, Chromatographie oder von Gassensoren.

Bei der Verbrennung entstehende Stickoxide führen zu einer Reizung und Schädigung der Atmungsorgane (insbesondere bei Stickstoffdioxid), Entstehung des sauren Regens durch Bildung von Salpetersäure. Bei der Rauchgasentstickung (auch DeNOx genannt) werden solche Stickoxide wie Stickstoffmonoxid (NO) und Stickstoffoxide (NOₓ) beispielsweise aus dem Abgas von Kohle- oder Gasturbinenkraftwerken entfernt.

Als solche Maßnahmen zur Entfernung von Stickoxiden aus den Abgasen sind im Stand der Technik reduktive Verfahren wie selektive katalytische Verfahren (Selektive katalytische Reduktion, SCR) bekannt.

Viele solcher Katalysatoren enthalten TiO₂, wobei das TiO₂ als Katalysator selbst oder im Zusammenspiel mit Übergangsmetalloxiden oder Edelmetallen als CoKatalysator wirkt. Für die SCR-Reaktion gibt es drei Arten von Katalysatoren. Die erste Art besteht im Wesentlichen aus Titandioxid, Vanadiumpentoxid und Wolframoxid, die zweite aus Titandioxid mit Edelmetall darauf. Die dritte Art basiert auf einer Zeolith-Struktur. Bei allen Systemen werden im Stand der Technik auch weitere Metallkomponenten zugegeben.

So wird ein Katalysatorsystem in der EP1533027 offenbart. Dort wird ein Verfahren zur Herstellung eines hochtemperaturstabilen TiO₂-haltigen Katalysators oder Katalysatorträgers beschrieben, bei dem eine wässrige, Titan-haltige Lösung zu einer Suspension eines feindispersen, anorganischen Trägermaterials in Wasser gegeben wird, wobei TiO₂ als Titanoxidhydrat auf den anorganischen Träger aufgefällt wird.

Eine mesoporöse, katalytisch wirksame Oxidmischung wird in der WO07/088213 beschrieben, die eine feste Lösung von TiO₂ und Al₂O₃ ineinander, bevorzugt von Al₂O₃ in TiO₂, enthält, wobei die Mesoporen bevorzugt eine einheitliche Porengrösse besitzen.

Im Stand der Technik sind weiterhin eine Reihe von Katalysatorsystemen bekannt, die Aluminiumoxid, Siliziumdioxid, Zirkoniumdioxid, Titandioxid, Magnesiumoxid, andere hochschmelzende Metalloxide oder Kombinationen davon enthalten.

So betrifft die DE 102008037608 einen Brenner für eine Gasturbine, der katalytisch stabilisiert ist. Die dazu verwendete Katalysatorschicht kann als einen aktiven Bestandteil Edelmetalle, Gruppe VIII-Edelmetalle, Unedelmetalle, Metalloxide oder irgendeine Kombination davon einschließen, und Elemente, wie Zirkonium, Vanadium, Chrom, Mangan, Kupfer, Platin, Palladium, Osmium, Iridium, Rhodium, Zer, Lanthan, andere Elemente der Lanthanidenreihe, Kobalt, Nickel, Eisen und ähnliche enthalten. Die Katalysatorschicht kann direkt auf ein Substrat oder auf eine Zwischenbindeschicht oder einen Waschüberzug (poröse Oxidschicht), zusammengesetzt aus Aluminiumoxid, Siliziumdioxid, Zirkoniumdioxid, Titandioxid, Magnesiumoxid, andere hochschmelzende Metalloxide oder irgendeine Kombinationen davon, aufgebracht werden.

Ein weiteres System und Verfahren zur Verringerung von Stickoxid-Emissionen ist auch in der WO08/045626 offenbart. Das Substratmaterial des beschriebenen SCR-Katalysators ist dabei so gewählt, mit der Betriebsumgebung (z. B. AbgasTemperaturen) verträglich zu sein, und schließt Cordierit, Nitride, Carbide, Boride und intermetallische Verbindungen, Mullit, Aluminiumoxid, Zeolithe, Lithiumaluminosilikat, Titandioxid, Feldspate, Quarz, geschmolzenes oder amorphes Siliciumdioxid, Tone, Aluminate, Titanate, wie Aluminiumtitanat, Silikate, Zirkoniumdioxid, Spinelle ebenso wie Kombinationen davon ein.

Bei B.M. Reddy und A. Khan, Cat. Rev. 47 (2005) 257 findet man eine Übersicht über Herstellwege, Aufbau und Eigenschaften von TiO₂-ZrO₂-Mischoxiden sowie ihre Anwendung als Träger für NOₓ-Speicher und -Reduktionskatalysatoren bei Autoabgasen mit dem Ziel, die thermische Stabilität und die Beständigkeit gegen Schwefelvergiftung zu verbessern.

In der analytischen und präparativen Hochdruckflüssigchromatografie, z.B. für Alkaloide und andere pharmazeutische Basen sowie die Phosphopeptidanreicherung, werden Säulen mit reinem ZrO₂ und TiO₂ benutzt.

Die Aufgabe der vorliegenden Erfindung ist es, die Nachteile des Standes der Technik zu überwinden.

Seitens der Erfinder wurde gefunden, dass die Bereitstellung von TiO₂-ZrO₂-Oxidmischungen für die Katalyse und Chromatographie , die eine hohe Oberfläche sowie eine hohe Lewisazidität aufweist und temperaturstabil ist, sowie von Verfahren zur Herstellung derselben diese Nachteile überwinden können. Temperaturstabil bedeutet hier, dass die Anatasform, die spezifische Oberfläche und die Oberflächenzusammensetzung hinsichtlich des Zr/Ti-Verhältnisses, aber auch erhebliche Anteile der Lewisazidität bis zu höheren Temperaturen erhalten bleiben. In der Chromatografie besteht Bedarf an einem verbesserten Trägermaterial, das die technischen und wirtschaftlichen Vorteile, wie von den Erfindern gefunden, in Form von einem ZrO₂ haltigen TiO₂ wie unten weiter erläutert, in sich vereint.

Genauer wurde seitens der Erfinder gefunden, dass die Nachteile des Standes der Technik überwunden werden können durch Bereitstellung von Materialien:
1. Katalysatormaterial aus nanokristallinem Anatas mit im Kristall gelöstem ZrO₂, dessen Zusammensetzung im Partikel auf einen Wert zwischen 1 und 20 mol% ZrO₂ / (TiO₂ + ZrO₂) eingestellt ist, mit einer spezifischen Oberfläche über 70 m²/g und das bis mindestens 500°C beständig ist. Die Erfinder haben herausgefunden, dass die Zusammensetzung der Oberfläche bei diesem Material besonders temperaturbeständig ist, da sich die ZrO₂-Konzentration an der Oberfläche über ein Verteilungsgleichgewicht mit der Konzentration im Kristallinneren einstellt, das sich erst über. 500°C verschiebt;
2. Chromatografieträgermaterial aus nanokristallinem TiO₂ vorzugsweise in Anatasform, dessen Oberfläche mit ZrO₂ modifiziert ist und dessen Zusammensetzung in der 1 - 2 Monolagen dicken Oberflächenschicht auf einen Wert zwischen 5 und 95 Mol-% ZrO₂ / TiO₂ + ZrO₂, somit bevorzugt in einer Schichtdicke von 10-40 µMol ZrO₂/m², eingestellt ist, das eine spezifische Oberfläche über 75 m²/g hat und ein Porenvolumen über 0,20 g/cm³ besitzt sowie bis mindestens 180°C beständig ist; Mikroporen sind in dem erfindungsgemäßen Chromatografieträgermaterial bevorzugt nicht vorhanden. Dabei beträgt die Kristallitgröße weniger als 30 nm, und das Material hat eine mittlere Teilchengröße zwischen 0,3 bis 20, bevorzugt zwischen 0,4 bis 5, besonders bevorzugt zwischen 0,4 bis 2 µm.

sowie von Verfahren zur Herstellung der vorgenannten Materialien.

Das erfindungsgemäße Katalysatormaterial kann als eine mesoporöse, acide katalytisch wirksame Oxidmischung in Form einer festen Lösung von TiO₂ und ZrO₂ ineinander, bevorzugt von ZrO₂ in TiO₂, angesehen werden, wobei die Mesoporen bevorzugt eine einheitliche Porengrösse besitzen.

Das Porenvolumen des Katalysatormaterials wird zu mehr als 50 %, bevorzugt mehr als 80 % und besonders bevorzugt mehr als 90 % durch solche Mesoporen gebildet.

Das Porenvolumen des Katalysatormaterials liegt zwischen 0,02 und 2 cm³/g, bevorzugt zwischen 0,05 bis 1 cm³/g, und ganz besonders bevorzugt zwischen 0,1 bis 0,7 cm³/g. Ganz besonders bevorzugt liegt das Porenvolumen bei mindestens 0,22 cm³/g. Dabei haben die Poren in der Regel einen Porendurchmesser d₅₀ zwischen 5 und 25 nm, bevorzugt 6 und 16 nm. Als logarithmische Porendurchmesserverteilung dargestellt, ergibt sich eine Breite [sigma] von höchstens 0,80, bevorzugt von höchstens 0,70, besonders bevorzugt zwischen 0,30 und 0,65. Mikroporen sind in dem erfindungsgemäßen Katalysatormaterial bevorzugt nicht vorhanden.

Die Porengrößenverteilung selbst nimmt Einfluss auf die Selektivität eines Chromatografieträgers oder Katalysators für die Größe der Gas- oder Flüssigkeitsmoleküle, und es wird eine schnellere Diffusion der Moleküle in und aus den Partikeln infolge größerer Porenradien ermöglicht. Dies führt gleichzeitig zu einer geringeren Neigung zur Porenverstopfung infolge der größeren Porenradien.

Erfindungsgemäß beträgt die spezifische Oberfläche des Katalysatormaterials nach BET zwischen 5 und 500 m²/g, bevorzugt zwischen 30 und 400 m²/g, besonders bevorzugt zwischen 50 und 300 m²/g. Ganz besonders bevorzugt liegt die spez. Oberfläche bei mindestens 70 m²/g.

Die Teilchengröße d50 des Katalysatormaterials liegt im Bereich von 0,3 bis 20, bevorzugt von 0,4 bis 5, besonders bevorzugt von 0,4 bis 2 µm. Infolge der optimierten Partikelgröße des erfindungsgemäßen Katalysatormaterials wird einerseits die zugängliche Oberfläche sowohl bei Verwendung als Katalysatorträgermaterial für die Belegung mit Pt u.a. aktiven Substanzen als auch beim fertigen Katalysator und bei Verwendung als Katalysator direkt für die Reaktanden erhöht. Andererseits sind die Teilchen für wash-coat-Anwendungen ohne weitere Aufmahlung schon klein genug für eine gute Vermischung mit anderen Pulverkomponenten und für eine gleichmäßige Dicke des wash-coats, und die Anschlämmung in Wasser ist noch nicht zu dickflüssig für die wirtschaftliche Beschichtung der Wabenkörper durch einmaliges Tränken.

Seitens der Erfinder sind folgende Herstellverfahren für die erfindungsgemäßen Materialien geeignet:
Das Ausgangsmaterial für das erste Material (Katalysatormaterial) ist Titansäure direkt, für das zweite Material (Chromatografieträger) ankalzinierte oder hydrothermal behandelte Titansäure. Titansäure ist das Fällprodukt aus der Hydrolyse von wässrigen anorganischen Titansalzlösungen, wie es industriell in großen Mengen und damit wirtschaftlich vorteilhaft aus Sulfatlösungen als metaTitansäure und aus Chlorid- und Nitratlösungen als ortho-Titansäure anfällt und je nach Ti-Salzquelle noch gewaschen und gebleicht wird.

Für die Herstellung des ersten Materials wird zu einer wässrigen Suspension von Titansäure die wässrige Lösung eines anorganischen Zr-Salzes gegeben, das Zr-Salz thermisch hydrolysiert, die Suspension (mit NaOH oder wässr. NH₃) neutralisiert, dann hydrothermal behandelt, filtriert, gewaschen und getrocknet. Es kann sich noch eine Glühung bei Temperaturen bis 550°C anschließen.

Bei der Herstellung von dem zweiten Material wird zu einer wässrigen Suspension ankalzinierter oder hydrothermal behandelter Titansäure die wässrige Lösung eines anorganischen Zr-Salzes gegeben, das Zr-Salz thermisch hydrolysiert und das Produkt filtriert, gewaschen und getrocknet. Dieses Verfahren ähnelt der anorganischen Oberflächenmodifizierung von TiO₂-Weißpigmenten, jedoch besteht erfindungsgemäß der Unterschied darin, dass das Substrat nicht aus kompakten, dispergierten Einzelteilchen, sondern aus ca. 1 - 10 µm großen porösen Teilchen besteht, auf deren äußerer und vor allem auch innerer Oberfläche Zr gleichmäßig verteilt hydrolysiert niedergeschlagen wird.

Da TiO₂- und ZrO₂-Oberflächen unterschiedliche Lewis-Azidität, chromatografische Trennleistung, Redoxaktivität und (foto-)katalytische Aktivität haben, lassen sich bei Verwendung der erfindungsgemäßen Materialien durch Variation der chemischen Oberflächenzusammensetzung daher diese Eigenschaften verändern und auf die jeweilige Anwendung abstimmen. Für das bereits in der Chromatographie benutzte ZrO₂, sind die mit ZrO₂ oberflächenmodifizierten erfindungsgemäßen TiO₂-Produkte eine kostengünstige Alternative. Entsprechend lassen sich die erfindungsgemäßen Materialien für Farbstoffsolarzellen, Gassensoren, als Chromatographiematerialien nach der Synthesereaktion pharmazeutischer Wirkstoffe verwenden.

Für die Teilchengröße des Endprodukts und die Vermischung der Komponenten darin sind - wie bei jeder Fällungsreaktion - die Konzentrationen der Edukte, ihre Zugabegeschwindigkeit, Rühren und Vermischen, der pH-Wert und die Temperatur von Bedeutung.

Wie oben angeführt, kann das erfindungsgemäße Verfahren als einen Behandlungsschritt eine Hydrothermal-Behandlung umfassen, bei dem das erhaltene Produkt als Fällungsgemisch der Vorformen von TiO₂ und ZrO₂ - Verbindungen zusammen mit Wasser in einen Druckbehälter (Autoklav) gegeben wird und über einen Zeitraum von einer Stunde bis 5 Tagen bei Temperaturen > 100°C gehalten wird, Bevorzugt sind Temperaturen von 100 bis 250°C über einen Zeitraum zwischen 1 und 20 Stunden, bevorzugt zwischen 2 und 16 Stunden, besonders bevorzugt zwischen 2 und 6 Stunden.

### Herstellungsbeispiele

Die Erfindung wird anhand der nachfolgenden Herstellungsbeispiele weiter erläutert.

Als Ausgangsmaterialien für die Herstellung wurden dabei folgende Substanzen eingesetzt:
i. gewaschene und gebleichte Metatitansäure aus dem Sulfatverfahren für TiO₂-Pigmente ohne Rutilkeime und Kalzinationsadditive, wegen anhaftender H₂SO₄ noch sauer, in Wasser angeschlämmt auf 368 g TiO₂/l
ii. Metatitansäuresuspension aus i. mit VE-Wasser auf 100 g TiO₂/l verdünnt und 8h bei 180°C hydrothermal behandelt (nach Filtrieren, Waschen, Trocknen Spez.Oberfläche 97 m²/g, keine Mikroporen, Mesoporenvolumen 0,39 cm³/g, Mesoporendurchmesser bevorzugt 20 - 30 nm, Kristallitgröße nach Scherrer 18 nm)
iii. Metatitansäuresuspension aus i. getrocknet und bei 480°C 90 min geglüht (Spez. Oberfläche 88 m²/g, keine Mikroporen, Mesoporenvolumen 0,21 cm³/g, kein Durchmesser bei den Mesoporen gemäß BJH-Auswertung bevorzugt, Kristallitgröße nach Scherrer 20 nm)
   - NaOH mit 190 g/L
   - (NH₄)₂CO₃
   - Zirkoniumorthosulfat-Lösung mit einem Zr-Gehalt entsprechend 18,4% ZrO₂, Dichte 1,432 g/cm³

### Herstellung von ZrO₂-oberflächenmodifizierter Metatitansäure ohne Mikroporen Beispiel 1-1

Die bei 180°C hydrothermal behandelte Metatitansäure wurde mit 12% ZrO₂/TiO₂ oberflächenmodifiziert. Dazu wurden 3,50 1 der Metatitansäuresuspension in einem 61-Rundkolben mit Rückflußkühler, Rührer, Heizpilz und Kontaktthermometer langsam mit 160 ml Zr(SO₄)₂-Lsg., verdünnt auf 500 ml, versetzt und dann 2 h gekocht. Danach wurde der pH-Wert langsam auf 5-6 mit NaOH von 190 g/L eingestellt, der Ansatz abgenutscht, mit 10 l VE-Wasser von 60°C pro kg Feststoff gewaschen und der Filterkuchen über Nacht bei 230°C getrocknet.

### Beispiele 1-2 und 1-3

Wie vorheriges Beispiel, aber Oberflächenmodifizierung mit 7,5 bzw. 3,0% ZrO₂/TiO₂.

### Beispiel 1-4

Die bei 480°C geglühte Metatitansäure wurde mit 7,5% ZrO₂/TiO₂ oberflächenmodifiziert. Dazu wurde Feststoff entsprechend 350 g TiO₂ in 3,40 l VE-Wasser am Dissolver aufdispergiert , dann im 6 I-Rundkolben wie oben mit 100 ml Zr(SO₄)₂-Lsg versetzt und wie in Beispiel 1-1 aufgearbeitet.

Untersuchung der Produkte:
- N₂-Porosimetrie
- Mildes Anätzen mit H₂SO₄ und Analyse der Extrakte auf Ti und Zr zur Bestimmung der chemischen Zusammensetzung der Feststoffoberfläche.
- Teilchengrößenverteilung mit HELOS nach 5 min Magnetrühren + 10 min Ultraschallbad in Calgonlösung
- Thermogravimetrie mit 10K/min nach Lagerung bei Raumtemperatur im Labor zur Bestimmung der Temperaturstabilität der ZrO₂-Beschichtung

Die Ergebnisse sind in Tab.1 angegeben und werden wie folgt erläutert.

Tab.1 zeigt, dass die Porosimetriedaten der benutzen Metatitansäure durch die Oberflächenmodifizierung kaum verschlechtert werden und der Grad der Bedeckung der Metatitansäure mit ZrO₂, unabhängig von der Art der benutzten mikroporenfreien Metatitansäure, durch die Menge der Zr(SO₄)₂-Lsg. beliebig eingestellt werden kann. Die Teilchengrößenverteilung war immer unimodal und eng, die mittl. Teilchengröße (d₅₀) lag stets bei 1,5 ― 2,0 µm, und die max. Teilchengröße lag bei 5 ― 10 µm.

In der Thermogravimetrie wurde ein starker Gewichtsverlust bis 320°C und ein schleichender bis 450°C beobachtet. Die Höhe des ersten Gewichtsverlusts der Materialien entsprach stets der Desorption von 4-6 Lagen physisorbiertem H₂O pro m² Oberfläche, ein zusätzlicher Beitrag durch Abspaltung von Konstitutions-H₂O aus der ZrO₂-Schicht auf den TiO₂-Teilchen wurde nicht beobachtet. Dies bestätigt, dass die hohe Trocknungstemperatur am Ende der Herstellung der Materialien wie gewünscht zu einer "lösemittelfreien", "ausgehärteten" ZrO₂-Schicht und damit zu einer temperaturstabilen Oberflächenmodifizierung geführt hat. Bei der maximalen Anwendungstemperatur der Materialien muß aber noch auf die Temperaturbeständigkeit der benutzten Metatitansäure Rücksicht genommen werden: sie entspricht der max. Temperatur in der Herstellung der benutzten Metatitansäure, also 180°C in Flüssigkeiten wie z.B. in der HLPC und 480°C in der Gaschromatografie und Katalyse von Gasreaktionen.

**Tab.1 Eigenschaften der Produkte von Typ 2**

| Beispiel | Spez. Oberfläche [m²/g] | davon in Mikroporen [m²/g] | Porenvolumen [cm³/g] | Abgeätzte Menge (Ti+Zr) [µMol/m²] | Mol% Zr/ (Ti+Zr) im Extrakt | Mol% theoretisch (a) |
|---|---|---|---|---|---|---|
| 1-1 | 101 | 8 | 0,30 | 23 | 91 | 80 |
| 1-2 | 89 | 0 | 0,35 | 20 | 57 | 50 |
| 1-3 | 93 | 0 | 0,39 | 19 | 22 | 20 |
| 1-4 | 76 | 0 | 0,20 | 21 | 53 | 50 |
| | | | | | | |

a) berechnet mit der Annahme, dass die ZrO₂-Inseln auf TiO₂ 1,5 Monolagen dick sind

### Herstellung von nanokristallinem Anatas mit darin gelöstem ZrO₂ ohne Mikroporen Beispiel 2-1 (Vergleichsbeispiel)

Es wurde ein Anatas ohne ZrO₂ hergestellt, indem gewaschene und gebleichte Metatitansäure, in Wasser angeschlämmt auf 368 g TiO₂/l, ohne Zusatz von Zr(SO₄)₂-Lsg. gekocht und dann neutralisiert wurde. Dazu wurde eine Menge angeschlämmte Metatitansäure, die 600 g TiO₂ enthielt, mit VE-Wasser auf 3 L verdünnt und dann in einem 61-Rundkolben mit Rückflußkühler, Rührer, Heizpilz und Kontaktthermometer 1 h gekocht. Danach wurde der pH-Wert langsam auf 5-6 mit ca. 360 ml NaOH von 190 g/L eingestellt.

### Beispiel 2-2

Es wurde ein Anatas mit 10% ZrO₂/TiO₂ hergestellt und wie in Beispiel 2-1 gearbeitet, aber vor dem Kochen wurden noch 228 ml ZrOSO₄-Lsg. in 60 min zugegeben.

### Beispiel 2-3

Es wurde ein Anatas mit 20% ZrO₂/TiO₂ hergestellt und wie in Beispiel 2-1 gearbeitet, aber vor dem Kochen wurden noch 455 ml ZrOSO₄-Lsg. in 60 min zugegeben.

### Beispiel 2-4

Es wurde ein Anatas mit 30% ZrO₂/TiO₂ hergestellt und wie in Beispiel 2-1 gearbeitet, aber vor dem Kochen wurden noch 683 ml ZrOSO₄-Lsg. in 60 min zugegeben. Während der pH-Einstellung am Schluß dickte die Suspension bei pH 4 leicht ein, war aber noch gut rührbar.

### Beispiel 2-5

Es wurde ein Anatas mit 40% ZrO₂/TiO₂ hergestellt und wie in Beispiel 2-1 gearbeitet, aber vor dem Kochen wurden noch 911 ml ZrOSO₄-Lsg. in 60 min zugegeben. Während der pH-Einstellung am Schluß dickte die Suspension bei pH 4 stark ein. Es wurden ca. 50 ml TE-H₂O zugegeben und die Rührerdrehzahl kurz erhöht.

### Hydrothermal (HT)-Behandlunq und Aufarbeitung

Jede der Suspensionen der Beispiele 2-1 bis -5 wurde durch Verdünnen mit VE-Wasser auf 120 g (TiO₂+ZrO₂)/L gebracht, dann in 5 Teile von je ca. 800 ml aufgeteilt und die Portionen im 2 L-Autoklaven bei unterschiedlichen Temperaturen und Zeiten (4h und 8 h bei 120°C = 2 bar sowie 2, 4 und 8h bei 180°C = 10 bar) HT-behandelt.

Die HT-behandelten Suspensionen wurden über eine Nutsche abfiltriert und zuerst mit 2 L 60°C heißem TE-Wasser pro kg (TiO₂ + ZrO₂), dann 4 L kalter (NH₄)₂CO₃-Lsg. (40g (NH₄)₂CO₃/L) und 2 L 60°C heißem TE-Wasser pro kg (TiO₂ + ZrO₂) gewaschen.

Alle Proben wurden bei 105°C getrocknet und in einer Laborschlagmühle gepulvert.

Die Mengenverhältnisse ZrO₂/TiO₂ in den Beispielen entsprechen bei Ausbildung fester Lösungen von ZrO₂ in TiO₂ molaren Zusammensetzungen gemäß der folgenden Tabelle 2:

**Tab.2 Produkte nach 8h HT-Behandlung bei 180°C sowie nach 4h zusätzlicher Glühung bei 500°C: Bruttozusammensetzung und Säure-Base-Eigenschaften aus py-IR-TPD**

| Beispiel | 2-1 | -2 | -3 | -4 | -5 |
|---|---|---|---|---|---|
| % ZrO₂/TiO₂ | 0 | 10 | 20 | 30 | 40 |
| Mol % ZrO₂ (Rest TiO₂) | 0 | 6,09 | 11,5 | 16,3 | 20,6 |
| Nur HT-Behandlung: rel. Anzahl der lewissauren Zentren in Absorbance pro Masse Probe | 4,0 | 5,2 | 6,6 | | |
| ... in Absorbance pro m² spez.Oberfläche | 5,8 | 6,5 | 7,4 | | |
| Zus. Glühung: rel. Anzahl der lewissauren Zentren in Absorbance pro Masse Probe | 5,1 | 5,2 | 5,6 | 5,1 | |
| ... in Absorbance pro m² spez.Oberfläche | 8,0 | 7,0 | 6,8 | 5,6 | |

Die Endprodukte wurden folgenden Untersuchungen unterzogen:
- Glühverlust
- quant. Analyse auf Na, NH₄, SO₄ (SO₄ mit CS-Mat)
- XRD für 2θ = 10 - 70° mit Cu Kα auf andere Reflexe als von TiO₂, aus Hauptreflex Anataskristallitgröße mit der Scherrer-Methode
- XRD: Gitterkonstanten von Anatas durch Mischen mit KCI p.a., bromfrei, als internem Standard und Bestimmung der Lage der Reflexe (200), (105), (211) und (204), weiter aus Signalform und Halbwertsbreite der Reflexe Bestimmung von Kristallitgröße und Mikrospannungen nach Williamson und Hall (erläutert z.B. bei U.Gesenhues, J.Appl.Cryst. 38 (2005) 749-756).
- REM + EDX nach HT bei 180°C
- TEM mit linescan und nanobeam nach HT bei 180°C
- N2-Porosimetrie
- Teilchengrößenverteilung mit HELOS nach 5'MR + 10'USuR in Calgonlösung von den Produkten aus 8h HT bei 120 und 180°C
- Adsorption von Pyridin und IR-Spektroskopie auf Brönsted- und Lewisazidität bei Temperaturen bis 400°C.

Zusätzlich wurden die Produkte nach 8 h HT-Behandlung bei 180°C im Muffelofen 4h bei 300, 400 und 500°C getempert und dann folgenden Untersuchungen unterzogen:
- N₂-Porosimetrie
- XRD 10-70°
- chem. Analyse wie oben.

Die Untersuchungsergebnisse werden in Tab.3 und 4 und dem folgenden Text beschrieben.

Glühverlust: Die Werte liegen alle in dem Bereich, wie er entsprechend der jeweiligen BET für sorbiertes H₂O zu erwarten ist.

Chem. Analyse: Der Sulfatgehalt liegt nach HT-Behandlung für 0% ZrO₂/TiO₂ unter 0,3% und steigt mit dem ZrO₂/TiO₂-Verhältnis auf 0,35 - 0,48%, er liegt damit, verglichen mit anderen TiO₂-Materialien für katalytische Anwendungen, niedrig. Der Na-Gehalt der Produkte ist mit 50 bis max. 340 ppm sehr niedrig. Der NH₄-Gehalt liegt nach HT-Behandlung für 0% ZrO₂/TiO₂ bei 0,10 - 0,13% und steigt mit dem ZrO₂/TiO₂-Verhältnis auf 0,38 - 0,40%. Durch zusätzliche Glühung werden SO₄- und NH₄-Gehalte bei hohen ZrO₂/TiO₂-Verhältnisen unter die Nachweisgrenze gedrückt.

XRD-Untersuchung: Die Produkte zeigen alle einen niedrigen Untergrund und ausnahmslos nur Anatasreflexe, auch die zusätzlich geglühten Proben keine von Rutil, ZrTiO₄ oder ZrO₂. Die Anatasreflexprofile und der Untergrund sprechen gegen breite Kristallitgrößenverteilungen, mechan. Spannungen, Kristallkorngefüge und amorphe Anteile. Die Kristallitgröße, berechnet aus dem Hauptreflex, steigt mit der HT-Temp. und -Dauer sowie zusätzlicher Glühung und sinkt generell mit steigendem ZrO₂/TiO₂-Verhältnis: Sie beträgt für 0% ZrO₂/TiO₂ nach 8h HT-Behandlung bei 120°C 11 nm, bei 180°C 18 nm und sinkt bis 40% ZrO₂/TiO₂ für beide Temperaturen auf 9 nm. Zusätzliche Glühung bei 500°C vergrößert die Kristalle, auf 21 nm bei 0% ZrO₂/TiO₂ und 12 nm bei 40% ZrO₂/TiO₂. Die Untersuchung der anderen Anatasreflexe zeigt: Die Gitterkonstanten a und c des Anataskristallgitters wachsen durch HT-Behandlung bei 180°C von 0 bis 20% ZrO₂/TiO₂ linear um 0,5 bzw. 1,3% an und schrumpfen bei höheren ZrO₂-Gehalten wieder. Dies beweist, dass bis zu den Maxima ZrO₂ im Anataskristall gelöst wird und darüber hinaus kein ZrO₂ mehr gelöst werden kann oder die Art des Einbaus von ZrO₂ in den Kristall wechselt. Die Ergebnisse verändern sich nicht bei Verkürzung der HT-Behandlung auf 2h, d.h. die gleichmäßige Verteilung des auf die äußere und innere Oberfläche der Metatitansäure aufgefällten ZrO₂ im Anataskristall erfolgt schnell. Durch zusätzliche Glühung nach der HT-Behandlung verändern sich a und c für niedrige ZrO₂-Gehalte nicht, jedoch wachsen beide Parameter weiter bis 30% ZrO₂/TiO₂, d.h. die Löslichkeit von ZrO₂ im Anatasgitter erhöht sich. Bei 120°C HT-Behandlungstemperatur lässt sich nur halb so viel ZrO₂ im Anatasgitter wie bei 180°C lösen.

Die weitere XRD-Auswertung deutet auf statistischen Einbau von Zr auf Ti-Plätzen und eine mit dem ZrO₂-Gehalt steigende Konzentration an zweidimensionalen Kristallbaufehlern hin.

Bestimmung der chemischen Zusammensetzung der Feststoffoberfläche durch Anätzen mit H₂SO₄: Bei den o.a. TiO₂/ZrO₂-Materialien mit 0 bis 30% ZrO₂/TiO₂ wurde nach HT-Behandlung allein und nach zusätzlicher Ankalzination das Verhältnis von Zr und Ti an der Teilchenoberfläche durch Ätzen mit H₂SO₄ und Analyse der Extrakte bestimmt und mit der Bruttozusammensetzung verglichen. Wie die Erfinder ermittelt haben, steigt das Verhältnis von Zr zu Ti an der Teilchenoberfläche mit dem Bruttoverhältnis stetig an, wobei das Verhältnis an der die Oberfläche stets nur wenig höher (30 -60%) als im Teilcheninneren ist, so dass belegt ist, dass eine feste Lösung von ZrO₂ in Anatas ohne nennenswerte anderen Aufbau der Oberflächenschicht vorliegt. Die Zusammensetzungen von Oberfläche und Partikelinnerem verändern sich schon nach kurzer HT-Behandlung und bei Glühung bis 500°C nicht mehr, so dass sich auf diese Weise Produkte mit stabilen Oberflächenzusammensetzungen von 0 bis mind. ca. 15 mol% ZrO₂ (Rest TiO₂) herstellen lassen.

Die TEM-Untersuchungen mit linescan und nanobeam sowie REM mit EDX lassen bei den TiO₂-ZrO₂-Mischungen für wenig bzw. stark aggregierte Bereiche mit einer Auflösung im nm- bzw. µm-Maßstab kein segregiertes TiO₂ oder ZrO₂ erkennen, und das Elementverhältnis Zr/Ti liegt stets unter 0,5. Dies bestätigt die Schlüsse aus den 2 vorhergehenden Untersuchungen. Mit TEM findet man weiter nach HT bei 180°C kugelförmige Primärteilchen, deren Durchmesser mit steigendem ZrO₂/TiO₂-Verhältnis von durchschn. 20 auf ca. 5 nm sinkt.

Porosimetrie: Metatitansäure ohne ZrO₂ ergibt bei HT-Behandlung Produkte ohne Mikroporen und mit Mesoporen, deren Durchmesser mitteleng verteilt sind; die Gesamt-BET sinkt mit steigender Temperatur der HT-Behandlung und bei 180°C auch gerade erkennbar bei Verlängerung der HT-Dauer über 2h hinaus. Mit steigendem ZrO₂/TiO₂-Verhältnis wächst die Gesamt-BET der Produkte nach HT-Behandlung, so dass TiO₂-ZrO₂-Oxidmischungen gegenüber reinem TiO₂ Vorteile in der Katalyse haben; der Einfluß der HT-Temperatur auf die Gesamt-BET ist nur bei sehr niedrigem ZrO₂/TiO₂-Verhältnis erkennbar, der Einfluß der HT-Dauer ist dabei nur bei 180°C und bis zu mittleren ZrO₂/TiO₂-Verhältnissen sichtbar. Mit steigendem ZrO₂-TiO₂-Verhältnis sind weiter nach HT-Behandlung bei 120°C immer größere Anteile der BET in Mikroporen, die Durchmesserverteilung der Poren wird somit immer breiter; für 180°C HT-Temperatur allerdings enthalten die Produkte bis zur Grenze der Löslichkeit von ZrO₂ in Anatas gemäß XRD keine Mikroporen. Das Porenvolumen sinkt kaum mit steigender HT-Temp. und steigendem ZrO₂/TiO₂-Verhältnis.

Nach Glühung enthalten alle Proben mit ZrO₂ keine Mikroporen mehr. Die Gesamt-BET sinkt mit steigender Glühtemperatur ohne und mit wenig ZrO₂ schwach, mit viel ZrO₂ stark. Die Erfinder vermuten, dass durch Koagulation benachbarter Teilchen bis 300°C die bei hohem ZrO₂/TiO₂-Verhältnis vorhandenen Mikroporen, bis 500°C auch Teile der Mesoporen verschwinden. Die Verteilung der Mesoporendurchmesser in den Glühprodukten ist (bei 300°C nur bis zur Löslichkeitsgrenze von ZrO₂) recht eng: Die mittlere Breite σ der Durchmesserverteilung nach BJH, wie in der WO07/088213 definiert, liegt zwischen 0,38 und 0,60; sie ist damit nicht ganz so eng wie bei den TiO₂/Al₂O₃-Mischungen der WO07/088213. Der mittlere Mesoporendurchmesser d₅₀, wie in der WO07/088213 definiert, nimmt gemäß Tab.3 mit steigendem ZrO₂/TiO₂-Verhältnis von 16 auf 6 nm (9 nm bis zur Homogenitätsgrenze) ab und wird durch die Glühtemperatur nicht beeinflusst; die Oberflächenzusammensetzung und Porengröße lassen sich also bei TiO₂/ZrO₂ nicht wie bei TiO₂/Al₂O₃ unabhängig voneinander steuern.

Zusammenfassend lässt sich feststellen, dass eine lange HT-Behandlung (bei ausreichend hoher Temperatur) und eine zusätzliche Glühung der Fällprodukte nur BET und Porenvolumen beeinflussen, also Größe und Aggregation der Nanoanataskristalle, aber nicht mehr die chem.Zusammensetzung von Kristalloberfläche und ―innerem.

Teilchengrößenverteilung mit HELOS: Nach HT-Behandlung bei 120°C liegen Aggregate mit d₅₀ = 1,0 - 1,5 µm und max. 4 µm vor, nur bei hohem ZrO₂/TiO₂-Verhältnis ist das Produkt bis auf max. 20 µm aggregiert. Die HT-Behandlung bei 180°C aggregiert außerdem das Produkt ohne ZrO₂, sonst sind keine Veränderungen erkennbar. Aus diesen Ergebnissen folgt, daß die Materialien bei der Herstellung von Katalysatoren für die Beschichtung mit weiteren aktiven Substanzen und für die Applikation als wash-coat von optimaler Feinheit sind, wie bereits auf S.5 Mitte erläutert. Für die Herstellung von Formkörpern aus den Produkten sollte die Teilchengröße vorher durch Sprühtrocknung oder Aufbaugranulation erhöht werden.

Oberflächenazidität: Die hydrothermal behandelten Proben zeigen keine Brönstedazidität und unabhängig vom ZrO₂-Gehalt die gleiche Verteilung von vielen mittelstarken und wenigen schwachen lewissauren Zentren. Ihre Anzahl bei Raumtemperatur, bezogen auf gleiche spez.Oberfläche, steigt nur schwach mit dem ZrO₂-Gehalt der Proben, jedoch sinkt sie beim Aufheizen bis 400°C für die reine TiO₂-Probe stetig bis auf Null, während sie bei den anderen Proben unabhängig vom ZrO₂-Gehalt nur auf 13 - 16% des Ausgangswertes absinkt; durch die Beimischung von ZrO₂ werden also Oberflächenkonzentration und Stärke der aziden Oberflächenzentren kaum verändert, jedoch erlaubt ihre höhere Temperaturstabilität eine Verwendung auch bei höheren Temperaturen. Weiter steigt die Anzahl der lewissauren Zentren pro Masse Oxidmischung mit dem ZrO₂-Gehalt deutlich an, so dass TiO₂-ZrO₂-Mischungen in Chromatographie und Katalyse wirtschaftlicher als reines TiO₂ sein sollten.

Auch die zusätzlich geglühten Proben haben keine Brönstedazidität, und bei den lewissauren Zentren die gleiche Verteilung der Stärke. Die Anzahl Lewiszentren pro Spez. Oberfläche sinkt im gleichen Maße, wie der ZrO₂-Gehalt steigt. Beim Aufheizen bis 400°C sinkt die Anzahl bei allen Proben, auch der aus reinem TiO₂, auf 13-16% des Ausgangswertes ab. Die Anzahl bei Raumtemperatur, bezogen auf Masse Oxidmischung, variiert nicht mit dem ZrO₂-Gehalt. Also kann man bei diesen Materialien in Chromatografie und Katalyse für beliebige Temperaturen mit dem ZrO₂-Gehalt die Oberflächenkonzentration an Zentren mit höherer Koordinationszahl (Zr) für adsorbierte Stoffe und die an redoxaktiven Zentren (Ti) stetig variieren, während die Azidität sich nicht verändert.

Gemäß der Erfindung lassen sich die Materialien direkt als Katalysatoren oder Katalysatorträger einsetzen, bevorzugt in chemischen Katalyseverfahren, in der petrochemischen Industrie und/oder in der organischen Grundstoffsynthese. Besonders geeignet sind sie für Hydro-Cracken und/oder Entschwefeln von Naphtha und Schweröl, ganz besonders bevorzugt im (FCC) - Fluid-Catalytic-Cracking- und (DCC) Deep-Catalytic-Cracking-Verfahren für hochschwefelhaltige Rohstoffe sowie im HDS (HydroDeSulphurization)-Verfahren und beim Hydrieren aromatischer Bestandteile, beim Isomerisieren und/oder Dehydrieren von leicht siedenden Kohlenwasserstoffen, ganz besonders bevorzugt in der Erdölaufarbeitung zur Erhöhung der Olefinausbeute sowie in der Butan- und Butenisomerisierung, in der Fischer-Tropsch-Synthese, ganz besonders bevorzugt zur Kohleverflüssigung, und/oder beim partiellen Oxidieren von gesättigten und ungesättigten Kohlenwasserstoffen, ganz besonders bevorzugt zu Essigsäure, Acrylsäure, Maleinsäure, Phthtal- und Terephthalsäure, in der Epoxidierung von langkettigen Olefinen, Terpenen und von Cyclohexan, sowie in der Hydroxylierung mehrkerniger Aromaten.

Weiterhin kann das erfindungsgemässe Katalysatormaterial in Systemen zur Stofftrennung, vorzugsweise als Packungsmaterial in Chromatographiesäulen verwendet werden.

Weiterhin kann das erfindungsgemässe Katalysatormaterial bei einem technischen Produktionsverfahren in ein und demselben Apparat sowohl als Katalysator und/oder Katalysatorträger als auch als chromatographische feste Phase verwendbar sein.

**Tabelle 3 Ergebnisse der N₂-Porosimetrie zu den Produkten vom Typ 2**

| **Probenbezeichnung** | | **BET [m²/g]** | **Anteil in Mesoporen (BJH) [m²/g]** | **... in Mikroporen (t) [m²/g]** | **Porosität [cm³/g]** | **häufigster Mesoporendurchmesser** **(BJH) [nm]** |
|---|---|---|---|---|---|---|
| 0% ZrO₂ / TiO₂ | HT 120°C 4h | 227 | 189 | 0 | 0.33 | |
| | ... 8h | 210 | 187 | 0 | 0.34 | |
| | HT 180°C 2h | 113 | 117 | 0 | 0.34 | |
| | .. 4h | 101 | 110 | 0 | 0.35 | |
| | ... 8h | 90 | 89 | 0 | 0.29 | |
| | " + Glühung 300°C | 80 | 88 | 0 | 0.32 | 16 |
| | " ... 400°C | 70 | 79 | 0 | 0.32 | 16 |
| | "...500°C | 62 | 67 | 4 | 0.29 | 15 |
| 10% ZrO₂ / TiO₂ | HT 120°C 4h | 261 | 159 | 28 | 0.33 | |
| | ... 8h | 250 | 157 | 59 | 0.32 | |
| | HT 180°C 2h | 129 | 127 | 0 | 0.31 | |
| | ... 4h | 112 | 108 | 6 | 0.30 | |
| | ... 8h | 102 | 96 | 0 | 0.30 | |
| | " + Glühung 300°C | 91 | 89 | 0 | 0.30 | 12 |
| | " ... 400°C | 80 | 82 | 0 | 0.31 | 11 |
| | "...500°C | 73 | 72 | 4 | 0.29 | 12 |
| 20% ZrO₂ / TiO₂ | HT120°C4h | 277 | 114 | 60 | 0.31 | |
| | ... 8h | 266 | 121 | 39 | 0.30 | |
| | HT 180°C 2h | 177 | 136 | 0 | 0.28 | |
| | ... 4h | 154 | 126 | 0 | 0.28 | |
| | ... 8h | 146 | 121 | 0 | 0.29 | |
| | " + Glühung 300°C | 113 | 108 | 0 | 0.26 | 8 |
| | " ... 400°C | 92 | 95 | 0 | 0.27 | 9 |
| | "...500°C | 83 | 81 | 4 | 0.26 | 10 |
| 30% ZrO₂ / TiO₂ | HT 120°C 4h | 258 | 92 | 72 | 0.26 | |
| | ... 8h | 267 | 93 | 103 | 0.29 | |
| | HT 180°C 2h | 218 | 109 | 36 | 0.26 | |
| | ... 4h | 211 | 106 | 34 | 0.25 | |
| | ... 8h | 204 | 114 | 23 | 0.25 | |
| | " + Glühung 300°C | 172 | 130 | 0 | 0.27 | |
| | ' ... 400°C | 127 | 128 | 0 | 0.28 | |
| | "...500°C | 91 | 97 | 0 | 0.23 | 7 |
| 40% ZrO₂ / TiO₂ | HT 120°C 4h | 273 | 95 | 90 | 0.28 | |
| | ... 8h | 268 | 94 | 87 | 0.28 | |
| | HT 180°C 2h | 276 | 92 | 98 | 0.28 | |
| | ... 4h | 261 | 89 | 85 | 0.27 | |
| | ... 8h | 259 | 92 | 73 | 0.28 | |
| | " + Glühung 300°C | 194 | 140 | 0 | 0.27 | |
| | "...400°C | 137 | 138 | 0 | 0.28 | |
| | "...500°C | 108 | 109 | 0 | 0.25 | 6 |

**Tab.4 Gitterkonstanten von Anatas mit darin gelöstem ZrO₂ aus XRD der Produkte vom Typ 2**

| | Mol % ZrO₂ | 0 | 6,09 | 11,5 | 16,3 | 20,6 |
|---|---|---|---|---|---|---|
| a [pm] | HT 180°C 8h | 378,8 | 379,9 | 380,7 | 380,6 | 379,7 |
| | + Glühung 500°C | 378,3 | 379,5 | 380,4 | 381,2 | 380,8 |
| c[pm] | HT 180°C 8h | 949,5 | 959,9 | 964,2 | 962,6 | 959,0 |
| | + Glühung 500°C | 949,4 | 958,9 | 965,4 | 970,4 | 969,0 |

## Patentansprüche

1. Katalysatormaterial aus Anatas mit einer Kristallitgröße unter 30 nm und im Kristall gelöstem ZrO₂, das eine Zusammensetzung im Partikel in einem Bereich von 1 bis 20 Mol.-% ZrO₂ / (TiO₂ + ZrO₂) und eine spezifische Oberfläche über 70 m²/g hat, sowie eine mittlere Teilchengröße zwischen 0,3 bis 20 µm besitzt und bis mindestens 500°C beständig ist.

2. Katalysatormaterial nach Anspruch 1, dessen Lewisazidität bei 400°C noch mind. 10% des Werts bei Raumtemperatur hat.

3. Katalysatormaterial nach Anspruch 1 oder 2 mit einer Mesoporendurchmesserverteilung, dessen mittlerer Teilchendurchmesser 6 bis 16 nm beträgt und deren Verteilungsbreite kleiner als 0,9 ist.

4. Chromatografieträgermaterial aus TiO₂-Teilchen mit einer Kristallitgröße unter 30 nm, einer spezifischen Oberfläche über 75 m²/g und einem Porenvolumen von mind. 0,20 g/cm³, deren Oberfläche zu einem Anteil zwischen 5 und 95% mit ZrO₂ in einer Schichtdicke von 10-40 µMol ZrO₂/m² temperaturbeständig bis mind. 180°C ist, sowie einer mittleren Teilchengröße zwischen 0,3 bis 20,

5. Verfahren zur Herstellung eines Chromatografieträgermaterials aus nanokristallinem Anatas mit einem Gehalt an Zr nach Anspruch 4, bei dem zu einer wässrigen Suspension ankalzinierter oder hydrothermal behandelter Titansäure die wässrige Lösung eines anorganischen Zr-Salzes gegeben wird, das Zr-Salz thermisch hydrolysiert wird, die erhaltene Suspension mit einer Lauge, ausgewählt aus LiOH, NaOH, KOH oder wässr. NH₃ neutralisiert und das Produkt filtriert, gewaschen und getrocknet wird.

6. Verfahren zur Herstellung eines Katalysatormaterials aus nanokristallinem Anatas mit einem Gehalt an Zr nach Anspruch 1 - 3, bei dem zu einer wässrigen Suspension von Titansäure die wässrige Lösung eines anorganischen Zr-Salzes gegeben wird, das Zr-Salz thermisch hydrolysiert wird, die erhaltene Suspension mit einer Lauge, ausgewählt aus LiOH, NaOH, KOH oder wässr. NH₃ neutralisiert wird, dann hydrothermal behandelt, filtriert, gewaschen und getrocknet wird.

7. Verfahren nach Anspruch 6, wobei das Produkt anstelle der Trocknung bei Temperaturen zwischen 250 und 550°C geglüht wird.

8. Verwendung des nach einem Verfahren der Ansprüche 6 bis 7 erhältlichen Katalysatormaterials oder des Katalysatormaterials aus nanokristallinem Anatas nach einem der Ansprüche 1 bis 3 zur Herstellung eines Abgaskatalysators.

9. Verwendung des nach einem Verfahren der Ansprüche 6 bis 7 erhältlichen Katalysatormaterials oder des Katalysatormaterials aus nanokristallinem Anatas nach einem der Ansprüche 1 bis 3 in chemischen Katalyseverfahren.

10. Verwendung des nach dem Verfahren gemäß Anspruch 5 erhältlichen Chromatografieträgermaterials oder des Chromatografieträgermaterials nach Anspruch 4 in der Chromatografie.
